Europäisches Patentamt

European Patent Office

Office européen des brevets

(11) Numéro de publication: **0 198 742**
**B1**

(12) **FASCICULE DE BREVET EUROPEEN**

(19)

(45) Date de publication du fascicule du brevet:
17.05.89

(21) Numéro de dépôt: **86400588.9**

(22) Date de dépôt: **18.03.86**

(51) Int. Cl.⁴: **H01G 4/38,** H01G 1/11

(54) Condensateur de puissance de moyenne ou haute tension.

(30) Priorité: **25.03.85 FR 8504529**

(43) Date de publication de la demande:
**22.10.86 Bulletin 86/43**

(45) Mention de la délivrance du brevet:
**17.05.89 Bulletin 89/20**

(84) Etats contractants désignés:
**AT BE CH DE GB IT LI NL SE**

(56) Documents cités:
**CH-A- 260 981**
**DE-C- 869 987**
**GB-A- 384 962**
**GB-A- 806 117**
**GB-A- 1 471 251**
**US-A- 1 874 936**

(73) Titulaire: **MERLIN GERIN, Rue Henri Tarze,**
**F-38050 Grenoble Cédex(FR)**

(72) Inventeur: **Bernard, Patrick, 4, rue des Edelweiss,**
**F-74000 Annecy(FR)**
Inventeur: **Larose, Hervé, Le Cardinale 2, Avenue de**
**Brougny, F-74000 Annecy(FR)**
Inventeur: **Masset, Daniel, L'Ecole de Monthon St.**
**Bernard, F-74000 Monthon St. Bernard(FR)**

(74) Mandataire: **Kern, Paul et al, Merlin Gerin Sce.**
**Brevets 20, rue Henri Tarze, F-38050 Grenoble**
**Cédex(FR)**

ACTORUM AG

# Description

L'invention est relative à un condensateur de puissance de moyenne ou haute tension à cuve étanche contenant un empilage d'éléments bobinés aplatis, chaque élément comprenant deux armatures en forme de bandes métalliques et des films diélectriques intercalés entre les bandes métalliques lors de l'enroulement, les deux bandes métalliques étant décalées latéralement pour faire dépasser le bord de l'une des bandes sur l'une des faces frontales de l'élément et le bord de l'autre bande sur l'autre face frontale de l'élément, les bords dépassant sur la même face frontale étant connectés électriquement par une soudure pour former une connexion de l'armature.

Des condensateurs du genre mentionnés sont réalisés à l'aide de bobinages composés de feuilles d'aluminium pour les armatures et une ou plusieurs feuilles de diélectrique solide en papier ou en matière synthétique. Les bobinages une fois aplatis constituent les éléments internes du condensateur, qui sont connectés en série et/ou en parallèle pour réaliser un condensateur d'une puissance déterminée pouvant supporter une certaine tension de service. Des éléments internes sont empilés dans une cuve étanche et imprégnés sous vide par un liquide diélectrique. Les éléments à armature débordante présentent sur chacune de leurs faces frontales un dépôt métallique, notamment une soudure, mettant en parallèle les différentes spires de l'armature et réalisant une connexion avec un élément adjacent et/ou un conducteur de liaison. La technique à armature débordante permet une bonne connexion électrique, mais elle nécessite une isolation entre deux éléments successifs de l'empilage susceptibles d'être à des potentiels différents, soit par leur appartenance à des groupes connectés en série, soit par la fusion de leur fusible interne.

La présente invention a pour but de permettre la réalisation d'un condensateur de puissance présentant une isolation appropriée entre les éléments successifs évitant tout risque d'amorçage entre ces éléments.

Le condensateur selon l'invention est caractérisé en ce qu'une feuille isolante est intercalée entre deux éléments adjacents, ladite feuille isolante ayant au moins un bord replié, qui recouvre la connexion de l'une des faces frontales pour l'isoler de la connexion de l'élément adjacent.

La feuille isolante est avantageusement conformée en bac rectangulaire de dimensions légèrement plus grandes que celles du bobinage aplati placé à l'intérieur du bac. Pour une mise en parallèle de plusieurs éléments adjacents appartenant à un même groupe les armatures débordantes d'un même côté sont reliées par soudure sur une bande centrale dégagée par une encoche ménagée dans le bord du bac isolant. Il est bien entendu inutile d'assurer une isolation entre ces armatures qui sont reliées électriquement. Les armatures opposées sont, dans le cas d'éléments à fusible interne, reliées individuellement aux fusibles qui sont eux-mêmes connectés en parallèle, par exemple par une barre de connexion. Le fusible est logé à l'intérieur du bac d'isolation qui assure un isolement entre les deux élements successifs. La barre de connexion des fusibles est disposée à l'extérieur des bacs isolants, la liaison étant réalisée par une languette de connexion du fusible traversant un orifice ou une fente ménagé dans le bord du bac isolant.

Le fusible interne est constitué d'un fil de metal fusible d'une longueur appropriée à la longueur de l'élément ment. Selon un développement de l'invention, ce fil fusible est monté sur un support isolant, notamment en carton ou tout autre matériau compatible avec les liquides diélectriques d'imprégnation, des languettes de connexion étant fixées sur le support. Un ruban adhésif collé sur le fil métallique assure le maintien latéral de ce dernier. Le fusible est relié à l'armature correspondante par une soudure qui assure en même temps la mise en parallèle des différentes spires de l'enroulement, cette soudure étant de préférence disposée en bordure de la face frontale du côté de l'élément fusible. Cette disposition du fusible permet de reporter la connexion sur la face latérale de l'élément en une zone éloignée des faces frontales. Le bac isolant constitue un berceau de support de l'élément condensateur et du fusible interne associé, laissant accès à la languette de connexion du fusible et à la face frontale de connexion à l'élément adjacent. Le bac entoure à faible jeu l'élément condensateur et il est utilisable pour des éléments de différentes épaisseurs. Le même bac est adapté à l'isolation de deux éléments adjacents appartenant à des groupes connectés en série si l'on prend soin de disposer ce bac en position inverse amenant l'encoche du côté des armatures connectées électriquement.

D'autres avantages et caractéristiques ressortiront plus clairement de la description qui va suivre d'un mode de mise en oeuvre de l'invention, donné à titre d'exemple non limitatif et représenté aux dessins annexés, dans lesquels :

- la figure 1 est une vue schématique en perspective partiellement arrachée, d'un condensateur selon l'invention;
- la figure 2 est une vue schématique d'un bobinage du condensateur selon la fig. 1, représenté partiellement déroulé;
- la figure 3 montre le schéma interne d'un condensateur selon l'invention;
- les figures 4 et 5 sont des vues schématiques en perspective d'un bobinage du condensateur selon l'invention, montrant les deux faces frontales opposées;
- la figure 6 est une vue en perspective d'un élément de condensateur et du fusible associé, placé dans le bac isolant;
- la figure 7 est une vue analogue à celle de la fig. 6, montrant le bac isolant avant la mise en place de l'élément condensateur;
- la figure 8 est une vue en perspective du fusible interne;
- la figure 9 est une vue en élévation d'un empilage d'éléments connectés en parallèle et en série;
- la figure 10 est une vue de gauche de l'empilage selon la fig. 9.

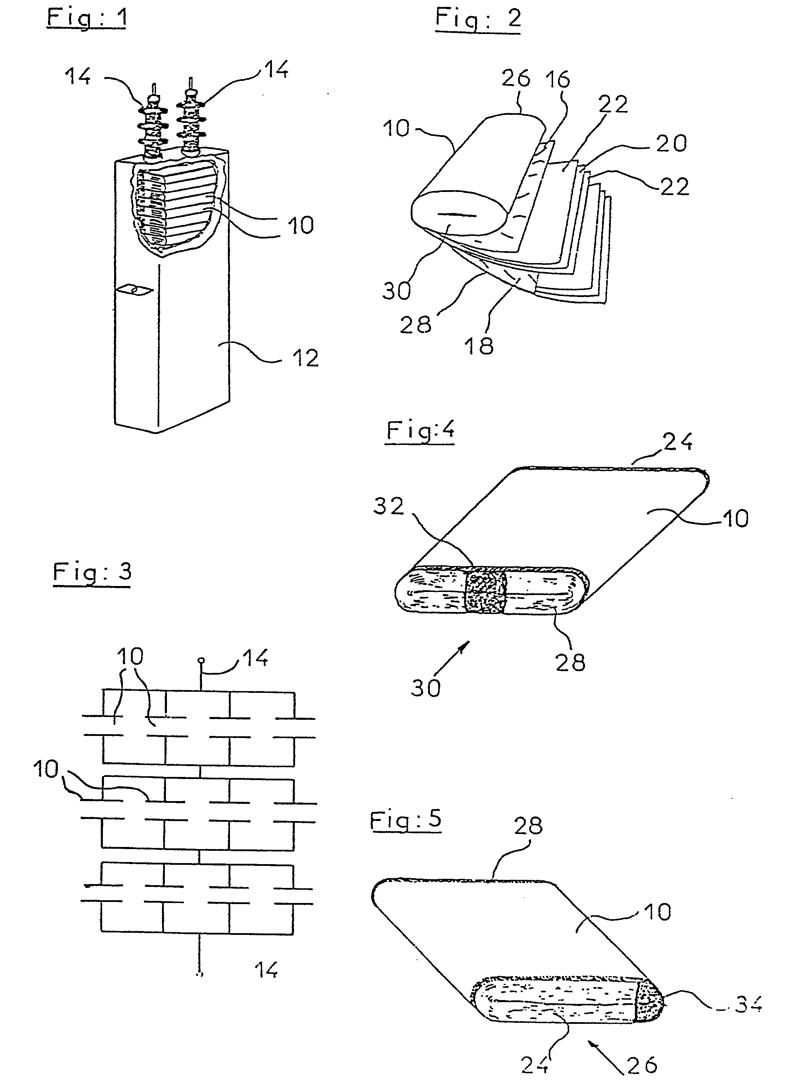

Sur les figures, une pluralité d'éléments de condensateur 10 sont empilés à l'intérieur d'une cuve étanche 12, remplie d'un liquide diélectrique d'imprégnation, et portant à sa partie supérieure deux traversées isolantes 14. Chaque élément de condensateur 10 est constitué de deux armatures métalliques 16, 18 en forme de bande enroulée avec interposition d'un film diélectrique constitué, dans l'exemple représenté à la figure 2, par une bande de papier 20 encadrée de deux bandes en matière synthétique 22, notamment en polypropylène, le film diélectrique pouvant bien entendu être entièrement synthétique et être constitué par un nombre différent de bandes. L'armature 16 est décalée vers le haut sur la fig. 2, de manière à faire dépasser son bord 24 de la face frontale 26 de l'enroulement 10. D'une manière symétrique, l'armature 18 est décalée vers le bas pour faire dépasser son bord 28 de la face frontale 30 de l'élément 10. Les armatures débordantes 24, 28 permettent une connexion électrique entre les spires de l'enroulement et un conducteur de connexion décrit ci-dessous. Après enroulement sur une machine standard l'élément de condensateur 10 est aplati et muni des connexions électriques. Ces éléments de condensateur 10 sont empilés dans la cuve 12 et connectés électriquement en parallèle et en série, notamment de la manière indiquée à la figure 3, pour répondre aux caractéristiques de tension et de capacité du condensateur. Après mise sous vide et remplissage de la cuve 12 par un liquide diélectrique d'imprégnation, la cuve 12 est scellée. De tels condensateurs sont bien connus des spécialistes, et il est inutile de les décrire plus en détail.

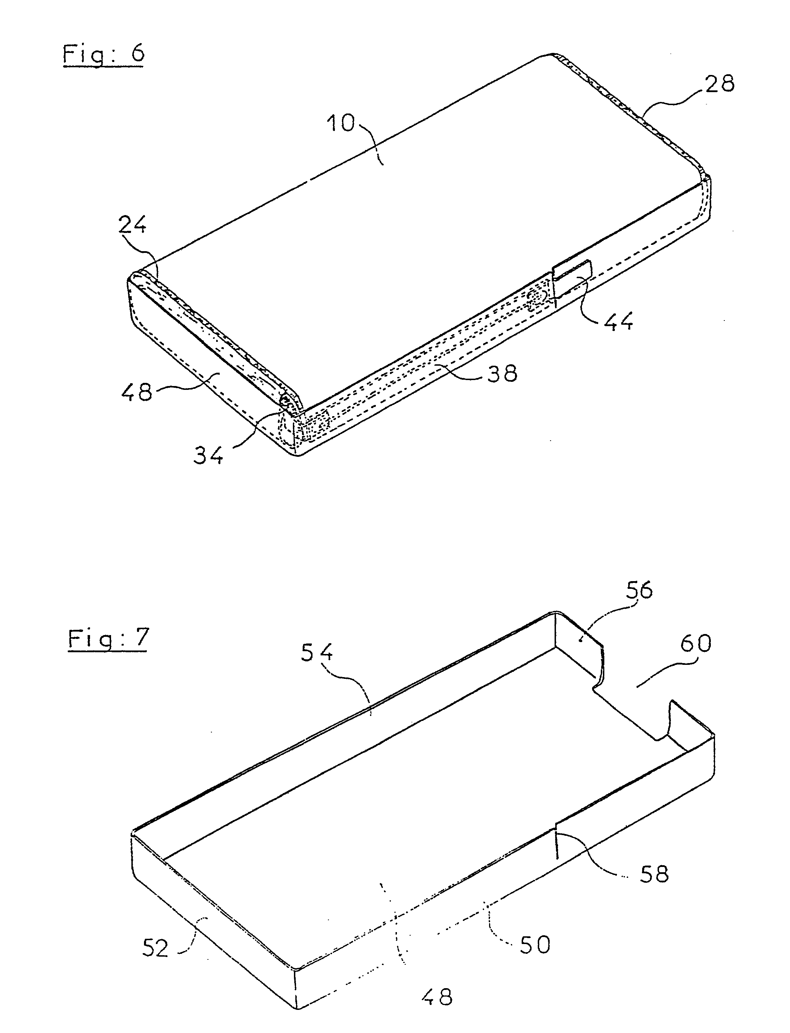

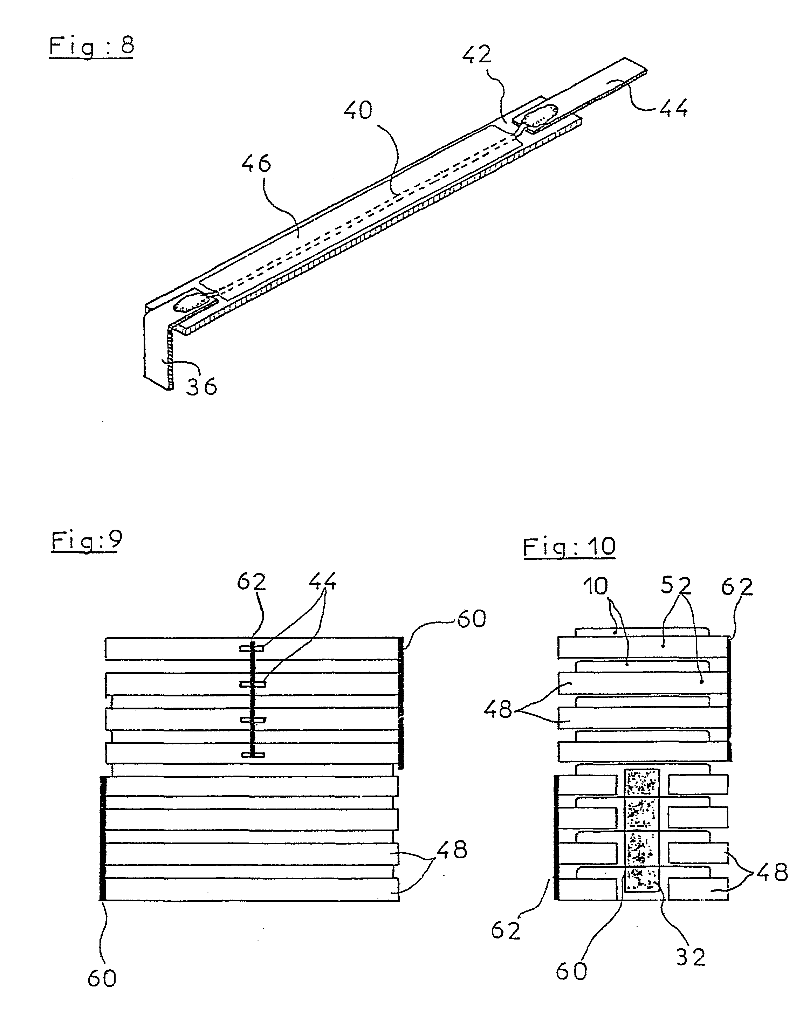

En se référant plus particulièrement aux figures 4 et 5, on voit que les armatures 28 sont reliées par une soudure 32 s'étendant sur la partie centrale de la face frontale 30, de manière à connecter en parallèle les spires de l'enroulement. D'une manière analogue, les armatures débordantes 24 sont reliées par une soudure 34, disposée à l'un des bords de la face frontale 26 de l'élément 10. La soudure 34 permet une connexion d'une languette 36 d'un élément fusible 38 associé à l'élément de condensateur 10. Le fusible 38 comporte un fil fusible 40 porté par une plaquette de support 42 en forme de bande de carton ou de plastique, les deux extrémités du fil fusible 40 étant soudées respectivement à la languette 36 et à une languette opposée 44. Les languettes 36, 44 sont assujetties au support 42, par exemple par agrafage, et l'élément fusible est maintenu sur le support 42 par un ruban adhésif 46. Il est clair que le fusible 38 peut être réalisé d'une manière différente. Le fusible 38 en forme de réglette s'étend le long du bord étroit de l'élément de condensateur 10 aplati, et l'ensemble fusible 38, élément 10, est placé dans un bac 48, représenté aux figures 6 et 7. Le bac 48 est constitué d'une feuille en matière synthétique thermoformée, de façon à présenter quatre bords relevés 50, 52, 54 et 56, qui encadrent à faible jeu les bords étroits de l'élément de condensateur 10. La hauteur des bords 50 à 56 est inférieure ou égale à celle de l'élément de condensateur 10, cette hauteur étant néanmoins suffisante pour assurer l'isolation des armatures débordantes d'éléments 10 superposés. Le fusible 38 est interposé entre le bord 50 du bac 48 et l'élément 10, la languette de connexion 44 traversant une fente 58 ménagée dans le bord 50. Le bord replié 56 présente une découpe ou encoche 60 en regard de la soudure 32 de l'armature débordante 28. On voit sur les figures 9 et 10 que l'encoche 60 permet une liaison des soudures 32 d'éléments superposés 10 assurant une connexion en parallèle des armatures 28. Les languettes 44 sont disposées à l'extérieur du bac 48, une connexion en parallèle étant réalisée par une barrette 62 soudée aux languettes 44. Dans l'empilage des éléments de condensateur 10 deux éléments superposés sont séparés par un bac isolant 48, une isolation accrue imposée par une différence de potentiel supérieure entre des armatures débordantes adjacentes pouvant être réalisée par un emboîtement de deux ou plusieurs bacs 48. Pour une mise en parallèle de plusieurs éléments de condensateur 10, par exemple de quatre, ces derniers sont empilés, les languettes de connexion 44 étant sur une même face, et les soudures de connexion 32 étant superposées. Pour une connexion en série, par exemple d'un deuxième groupe de quatre éléments 10 mis en parallèle, on dispose les éléments pour faire apparaître la soudure de connexion 32 sur la face frontale opposée de l'empilage. Les languettes 44 viennent bien entendu sur la face latérale opposée, ce qui évite tout risque de claquage entre les deux éléments 10 adjacents connectés en série. L'empilage peut comprendre un nombre quelconque de groupes d'éléments dont la connexion en série est assurée par des conducteurs (non représentés) reliant les barrettes 62 aux soudures 32.

Le bac isolant 48 est particulièrement avantageux pour des éléments de condensateur 10 à fusible interne 38, mais il est utilisable pour une isolation d'éléments superposés connectés en série. La forme de berceau du bac 48 permet de réaliser un module utilisable pour différents types de condensateurs, ces modules pouvant être superposés ou juxtaposés verticalement. On ne sortirait pas du cadre de l'invention en logeant l'élément de condensateur 10 dans une boîte constituée de deux bacs 48 dont l'un forme le fond et l'autre le couvercle. Le matériau du bac isolant 48 doit être compatible avec le liquide d'imprégnation et suffisamment rigide pour assurer également une protection mécanique de l'élément 10. La mise en oeuvre est simple et économique tout en assurant une bonne isolation.

**Revendications**

1. Condensateur de puissance de moyenne ou haute tension à cuve étanche (12) contenant un empilage d'éléments (10) bobinés aplatis, chaque élément (10) comprenant deux armatures (16, 18) en forme de bandes métalliques et des films diélectriques (20, 22) intercalés entre les bandes métalliques (16, 18) lors de l'enroulement, les deux bandes métalliques étant décalées latéralement pour faire dépasser le bord (24) de l'une (16) des bandes sur l'une (26) des faces frontales de l'élément (10) et le bord (28) de l'autre bande (18) sur l'autre face frontale (30) de l'élément, les bords dépassant sur la même face frontale étant connectés électriquement par une soudure (32, 34) pour former une connexion de l'armature, caractérisé en ce qu'une feuille isolante (48) est intercalée entre deux éléments (10) adjacents, ladite feuille (48) isolante ayant au moins un bord replié (52), qui recouvre la connexion (34) de l'une (26) des faces frontales pour l'isoler de la connexion de l'élément adjacent.

2. Condensateur selon la revendication 1, caractérisé en ce que ladite feuille est agencée en forme de bac (48) dont les quatre bords (50-56) repliés encadrent le pourtour de l'élément (10) aplati.

3. Condensateur selon la revendication 2, caractérisé en ce que le bord (56) replié de recouvrement de l'un (30) des faces frontales présente une encoche (60), qui dégage la connexion (32) de cette face frontale pour permettre une liaison électrique, par soudage des connexions (32) des deux éléments (10) adjacents.

4. Condensateur selon la revendication 3, caractérisé en ce que ladite liaison électrique par soudure (32) s'étend dans la zone centrale de la face frontale de l'élément.

5. Condensateur selon la revendication 1, 2, 3 ou 4, caractérisé en ce que ladite feuille isolante est une feuille en matière isolante thermoformée pour constituer un bac (48).

6. Condensateur selon la revendication 1, 2, 3, 4 ou 5, caractérisé en ce qu'un conducteur (36, 40, 44) est relié à la connexion (34) de l'armature débordante (16) coiffée par ledit bord (52) replié, ledit conducteur s'étendant entre la face latérale de l'élément (10) et le bord (50) replié correspondant pour sortir par une fente (58) ménagée dans la feuille isolante dans une zone de connexion du côté de la face latérale de l'élément.

7. Condensateur selon la revendication 6, caractérisé en ce qu'un tronçon dudit conducteur est constitué par un fil fusible (40) porté par un support isolant (42).

8. Condensateur selon la revendication 7, caractérisé en ce que ledit conducteur comprend un support isolant (42) allongé prolongé aux deux extrémités par des languettes (36, 44) de connexion fixées au support et un fil fusible (40) intercalé entre les deux languettes et maintenu par un ruban adhésif (46).

9. Condensateur selon la revendication 6, 7 ou 8, caractérisé en ce que ledit conducteur est relié par soudage à la connexion de l'armature disposée au bord de la face frontale du côté dudit conducteur.

**Patentansprüche**

1. Leistungskondensator für Mittel-oder Hochspannung mit einem dichten Behälter (12), der einen Stapel abgeflachter, gewickelter Elemente (10) enthält, wobei jedes Element (10) zwei metallische streifenförmige Beschläge (16, 18) aufweist und dielektrische Filme (20, 22), die zwischen den Metallstreifen (16, 18) während der Aufwicklung eingeschoben werden und wobei die beiden Metallstreifen seitlich versetzt sind, um den Rand (24) des einen Streifens (16) auf einer (26) der Vorderflächen des Elementes (10) überragen zu lassen und den Rand (28) des anderen Streifens (18) auf der anderen Vorderfläche (30) des Elementes überragen zu lassen, wobei die auf derselben Vorderfläche überragenden Ränder elektrisch durch eine Schweissung (32, 34) verbunden sind, um eine Verbindung des Beschlages zu bilden, dadurch gekennzeichnet, dass ein isolierendes Blatt (48) zwischen zwei nebeneinanderliegenden Elementen (10) eingefügt ist, wobei das genannte isolierende Blatt (48) wenigstens einen umgebogenen Rand (52) aufweist, der die Verbindung (34) einer (26) der Vorderflächen bedeckt, um sie von der Verbindung des danebenliegenden Elementes zu isolieren.

2. Kondensator gemäss Anspruch 1, dadurch gekennzeichnet, dass das genannte Blatt als Kasten (48) ausgebildet ist, dessen vier umgebogene Ränder (50–56) den äusseren Umfang des abgeflachten Elementes (10) umrahmen.

3. Kondensator gemäss Anspruch 2, dadurch gekennzeichnet, dass der umgebogene Rand (56) zum Bedecken einer (30) der Vorderflächen einen Schlitz (60) aufweist, der die Verbindung (32) von dieser Vorderfläche befreit, um eine elektrische Verbindung zu ermöglichen, durch Schweissen der Verbindungen (32) der beiden nebeneinanderliegenden Elemente (10).

4. Kondensator gemäss Anspruch 3, dadurch gekennzeichnet, dass sich die genannte elektrische Verbindung mittels Schweissung (32) in der mittleren Zone der Vorderfläche des Elementes erstreckt.

5. Kondensator gemäss Anspruch 1, 2, 3 oder 4, dadurch gekennzeichnet, dass das genannte isolierende Blatt ein Blatt aus wärmegeformten Isoliermaterial ist, um einen Kasten (48) zu bilden.

6. Kondensator gemäss Anspruch 1, 2, 3, 4 oder 5, dadurch gekennzeichnet, dass ein Leiter (36, 40, 44) mit der Verbindung (34) des von dem genannten umgebogenen Rand (52) bedeckten überragenden Beschlages (16) verbunden ist, wobei sich der genannte Leiter zwischen der Seitenfläche des Elementes (10) und dem entsprechenden umgebogenen Rand (50) erstreckt, um durch einen Schlitz (58) auszutreten, der in dem Isolierblatt vorgesehen ist in einer Verbindungszone neben der Seitenfläche des Elementes.

7. Kondensator gemäss Anspruch 6, dadurch gekennzeichnet, dass ein Abschnitt des genannten Leiters von einem Schmelzdraht (40) gebildet wird, der von einem Isolierträger (42) getragen wird.

8. Kondensator gemäss Anspruch 7, dadurch gekennzeichnet, dass der genannte Leiter einen länglichen Isolierträger (42) aufweist, der an beiden Enden durch mit dem Träger verbundene Verbindungszungen (36, 44) verlängert wird und durch einen Schmelzdraht (40), der zwischen den beiden Zungen eingefügt ist und von einem Klebeband (46) gehalten wird.

9. Kondensator gemäss Anspruch 6, 7 oder 8, dadurch gekennzeichnet, dass der genannte Leiter durch Schweissung mit der Verbindung des am Rande der Vorderfläche auf der Seite des genannten Leiters angeordneten Beschlages verbunden ist.

**Claims**

1. A power capacitor for middle or high voltage with a sealed container (12) containing a stack of flattened wound elements (10), each element (10) comprising two armatures (16, 18) in the form of metal strips and dielectric films (20, 22) inserted between the metal strips (16, 18) when winding takes place, the two metal strips being laterally offset so that the edge (24) of one (16) of the strips protrudes onto one (26) of the front faces of the element (10) and the edge (28) of the other strip (18) onto the other front face (30) of the element, the edges protruding onto the same front face being electrically connected by a weld (32, 34) to form a connection of the armature, characterized in that an insulating foil (48) is inserted between two adjacent elements (10), said insulating foil (48) having at least one folded edge (52), which covers the connection (34) of one (26) of the front faces to insulate it from the connection of the adjacent element.

2. The capacitor according to claim 1, characterized in that said foil is arranged in the form of a tank (48) whose four folded edges (50–56) surround the circumference of the flattened element (10).

3. The capacitor according to claim 2, characterized in that the folded edge (56) overlapping one (30) of the front faces has a notch (60), which allows access the connection (32) of this front face to enable an electrical connection to be made, by welding the connections (32) of the two adjacent elements (10).

4. The capacitor according to claim 3, characterized in that said electrical connection by welding (32) extends in the centre area of the front face of the element.

5. The capacitor according to claim 1, 2, 3 or 4, characterized in that said insulating foil is a foil made of insulating material thermoformed to constitute a tank (48).

6. The capacitor according to claim 1, 2, 3, 4 or 5, characterized in that a conductor (36, 40, 44) is connected to the connection (34) of the protruding armature (16) covered by said folded edge (52), said conductor extending between the side face of the element (10) and the corresponding folded edge (50) to exit via a slot (58) arranged in the insulating foil in a connection area on the side-face of the element.

7. The capacitor according to claim 6, characterized in that a section of said conductor is formed by a fuse-wire (40) supported by an insulating support (42).

8. The capacitor according to claim 7, characterized in that said conductor comprises an elongated insulating support (42) extended at both ends by connecting tabs (36, 44) fixed to the support and a fuse-wire (40) inserted between the two tabs and secured by an adhesive tape (46).

9. The capacitor according to claim 6, 7 or 8, characterized in that said conductor is connected by welding to the armature connection located on the edge of the front face on said conductor side.

Fig: 1

Fig: 2

Fig: 3

Fig: 4

Fig: 5

Fig: 6

10

28

24

44

48

38

34

Fig: 7

56

54

60

58

52

50

48

Fig : 8

Fig:9

Fig : 10